# FASCICULE DE BREVET EUROPEEN

(11) **EP 3 544 543 B1**
(45) Date de publication et mention de la délivrance du brevet: **08.09.2021**
(21) Numéro de dépôt: 17811648.9
(22) Date de dépôt: 22.11.2017
(51) Int. Cl.: A61C 13/30

(54) **STRUCTURE DE RENFORT POUR RECONSTITUTION DENTAIRE CORONO-RADICULAIRE ET SON PROCEDE D'UTILISATION SUR UN MODELE DE LABORATOIRE.**
VERSTÄRKUNGSSTRUKTUR FÜR KORONAL-RADIKULÄRE ZAHNRESTAURATION UND ANWENDUNGSVERFAHREN AUF EINEM LABORMODELL.
REINFORCING STRUCTURE FOR CORONAL-RADICULAR DENTAL RESTORATION AND METHOD OF USE ON A LABORATORY MODEL.

(30) Priorité: 22.11.2016 FR 1661374
(43) Date de publication de la demande: 02.10.2019
(73) Titulaire: Maneuf, Bernard, 38500 Voiron (FR); Collombin, André, 38500 Voiron (FR); Clunet-Coste, Bruno, 38960 Saint-Etienne-de-Crossey (FR)
(72) Inventeur: Maneuf, Bernard, 38500 Voiron (FR); Collombin, André, 38500 Voiron (FR); Clunet-Coste, Bruno, 38960 Saint-Etienne-de-Crossey (FR)
(74) Mandataire: Talbot, Alexandre
(86) Numéro de dépôt international: PCT/FR2017/053201
(87) Numéro de publication internationale: WO 2018/096260

(56) Documents cités:
- EP-A1- 0 809 475
- EP-A1- 1 806 110
- JP-A- 2015 198 885
- US-A1- 2015 305 829
- US-B1- 6 371 763

## Description

### Domaine technique de l'invention

L'invention est relative à une structure de renfort pour reconstitution dentaire corono-radiculaire, à un procédé de réalisation d'une reconstitution corono-radiculaire, à une reconstitution corono-radiculaire et à un procédé de gravure d'une tel reconstitution corono-radiculaire.

### État de la technique

En dentisterie, et notamment en endodontie, lors de la réalisation de reconstitutions dentaires corono-radiculaires, et en particulier pour reconstruire la partie coronaire d'une dent, la partie radiculaire de la dent est tout d'abord mise en forme par alésage. L'alésage est réalisé grâce à des outils rotatifs ou ultrasoniques cylindro-coniques.

Après mise en forme, un tenon est généralement introduit et scellé, dans le canal radiculaire, pour servir d'ancrage à une reconstitution coronaire. Pour assurer une bonne tenue mécanique, le tenon doit pénétrer jusqu'au tiers apical de la racine.

Les canaux radiculaires sont obturés hermétiquement avec des matériaux spécifiques, comme par exemple des cônes cylindro-coniques en gutta-percha, des pâtes à l'oxyde de zinc/eugénol, ou encore des résines sous forme de préparations bi-composantes.

La partie coronaire de la reconstitution dentaire corono-radiculaire est, ensuite, arrangée autour du tenon radiculaire. Généralement, la partie coronaire de la reconstitution est composée de résine composite.

Il s'agit du schéma traditionnel de "la dent à pivot" : la dent est construite autour du tenon radiculaire principal qui assure sa rétention.

Comme décrit dans le brevet CH-A-562605, les tenons peuvent être en matériau métallique, et sont pourvus chacun d'un filetage destiné à visser la base du tenon dans le canal radiculaire. Ces tenons sont fabriqués par tournage et leur section est toujours circulaire avec un profil en forme de cône ou cylindro-coniques, avec des angles rentrants ou sortants.

Des tenons en matériau composite préfabriqué, éventuellement renforcé par des fibres, sont décrits dans les documents FR 2588181, US-A-4936776, DE-A-3825601, et EP-A-0432001. Les tenons présentent une forme finie cylindrique ou cylindro-conique rectiligne et une structure rigide.

Or, le canal est souvent de forme irrégulière, par exemple de section aplatie, ovale ou en forme de huit. Il peut être très évasé dans sa partie coronaire et de section ovalaire. Le canal peut être courbe et mal centré et les racines peuvent être plates ou concaves.

Pour mettre en place le tenon dans le canal radiculaire, le praticien doit donc élargir le canal et en rectifier le trajet. La pose de tenon peut donc être dangereuse. En effet, la préparation du logement du tenon, par alésage mécanique, oblige à des préparations circulaires avec un déplacement du canal du côté de la courbe, un affaiblissement de la paroi canalaire et un risque élevé de fragilisation et de perforation.

De plus, la recherche de contacts maximums entre le tenon et les murs canalaires, tout en essayant de limiter la mutilation dentinaire, obligent le praticien à faire le choix suivant :
- soit, l'utilisation de forets de diamètre élevé avec un risque important de perforation,
- soit l'utilisation d'un foret de diamètre raisonnable ; mais dans ce cas, le tenon ne possédera que des contacts partiels avec les zones non instrumentées, ou souillées de matériel d'obturation, ce qui conduit à un mauvais collage et à une mauvaise transmission des contraintes.

Le document FR-A-2753365 décrit un tenon endo-canalaire. Le tenon est formé d'une âme enrobée de manchons. L'âme en matériau composite est semi-rigide et élastique : elle est composée d'une matrice organique renforcée par des fibres. Les manchons sont en matériau composite préimprégné de résine, et se trouvent dans un état pâteux d'avant polymérisation.

Avant et pendant son introduction dans le canal radiculaire, l'insert, de section cylindrique, est donc flexible et malléable. Le matériau est ensuite polymérisé à la demande par des moyens de réticulation pour passer dans un deuxième état polymérisé.

Ce type de renfort permet un alésage moins important du canal, réduisant les risques de fragilisation ou de perforation des parois canalaires.

Cependant, l'état d'avant polymérisation de la résine imprégnant le renfort, et l'extrême malléabilité du tenon, rendent très aléatoire son introduction dans un canal dentaire ainsi que la complète photo-polymérisation au niveau de l'apex.

Le document US 6 371 763 B1 divulgue un pivot de renfort canalaire composite ayant une pluralité de tiges en fibres de verre et une tige centrale en métal, par exemple en platine.

Le document GB 1255875 décrit un pivot adaptable, au cas par cas, à la morphologie de la racine de la dent. L'ancrage canalaire dentaire anatomique a une section non circulaire. Cette forme permet d'augmenter les zones de contact entre le tenon dentaire et le canal radiculaire et une meilleure distribution des forces mécaniques.

La partie coronaire d'une reconstitution dentaire corono-radiculaire peut également être renforcée en insérant latéralement au tenon principal des mini-tenons auxiliaires (produit Fibercone® de la société RTD). Ces tenons correspondent au schéma traditionnel du tenon central de la dent à pivot. Les tenons accessoires ne renforcent pas la totalité de la partie coronaire d'une reconstitution corono-radiculaire.

Afin de faciliter la reconstitution dentaire corono-radiculaire, il a été proposé d'utiliser des groupes de tiges qui sont liés ensembles par un élément de liaison. Les extrémités des tiges sont libres les unes par rapport aux autres afin de faciliter l'introduction des tiges dans le canal dentaire et renforcer efficacement la connexion mécanique avec le canal dentaire qui est rempli par une résine composite. Différentes solutions techniques sont présentées dans les documents US 6,197,410, US 6,371,763, US 6,183,253, US 2011/0294095 ou US 2015/0305829.

Cependant, il est quelquefois nécessaire d'accéder, de nouveau, aux zones apicales de la racine dentaire. Il faut alors graver les différents matériaux formant la reconstitution corono-radiculaire pour former un canal d'accès à la zone infectée. Comme indiqué dans les nombreux modes de réalisation précédents, la reconstitution est réalisée par un matériau composite qui comporte des renforts réalisés par des tiges ou des tenons. Dans la mesure où la résine composite a été renforcée pour favoriser la connexion mécanique, les opérations de gravure sont de plus en plus compliquées avec des risques accrus de perforation des parois canalaires.

### Objet de l'invention

L'invention a pour but de remédier aux inconvénients de l'art antérieur et, en particulier, de proposer un renfort structurel pour reconstitution dentaire corono-radiculaire renforçant en continuité à la fois la partie coronaire et la partie radiculaire tout en réduisant les risques de fragilisation ou de perforation des parois canalaires lors des opérations d'accès a posteriori.

On tend vers cet objet au moyen d'une structure de renfort pour reconstitution dentaire corono-radiculaire comprenant :
- une pluralité de tiges de renfort,
- une tige additionnelle réalisée dans un matériau se gravant plus rapidement que la pluralité de tiges de renfort de manière à former un canal de gravure,
- un élément d'assemblage configuré pour grouper la pluralité de tiges de renfort et la tige additionnelle de manière à former un faisceau de tiges, ledit élément d'assemblage recouvrant partiellement la longueur des tiges de renfort, la tige additionnelle étant fixée directement ou indirectement à l'élément d'assemblage entre les tiges de renfort
l'élément d'assemblage étant configuré pour maintenir les tiges de renfort ensemble lors de leur manipulation de telle sorte qu'il est possible de retirer des tiges de renfort une à une ou par petite quantité,
la tige additionnelle étant fixée à au moins une tige de renfort adjacente, sur au moins 70% de sa longueur et/ou ponctuellement au moyen de plusieurs points de fixation distincts les uns des autres.

Dans un développement, la tige additionnelle est entourée par la pluralité de tiges de renfort.

De manière avantageuse, la tige additionnelle est fixée directement à au moins trois tiges de renfort.

Dans un mode de réalisation avantageux, la tige additionnelle recouvre au moins un tiers de la circonférence de la tige de renfort dans un plan de coupe perpendiculaire à l'axe longitudinal de la tige de renfort.

Il est avantageux de prévoir que la tige additionnelle recouvre au moins deux tiers de la circonférence de la tige de renfort dans le plan de coupe perpendiculaire à l'axe longitudinal de la tige de renfort.

Dans un mode de réalisation avantageux, la tige additionnelle est en polyisoprène.

Dans un autre développement, l'élément d'assemblage est disposé à une des extrémités du faisceau de tiges.

Avantageusement, la pluralité de tiges de renfort comporte des tiges de renfort différentes agencées pour présenter un diamètre croissant depuis le centre du faisceau vers la périphérie du faisceau.

Préférentiellement, les tiges de renfort ont un diamètre décroissant depuis le centre du faisceau vers la périphérie du faisceau.

Dans un mode de réalisation particulier, le faisceau de tiges comprend de 3 à 10 tiges de renfort.

Il est avantageux de prévoir que les tiges de renfort de la pluralité de tiges de renfort ont des diamètres allant de 0,1mm à 0,5mm.

L'invention a également pour objet un procédé de réalisation d'une reconstitution dentaire corono-radiculaire, sur un modèle de laboratoire qui soit simple à réaliser et qui facilite la réalisation d'un accès à la partie apicale du canal dentaire une fois la reconstitution effectuée.

On tend à atteindre cet objectif au moyen d'un procédé comprenant les étapes suivantes :
- remplir au moins partiellement un canal dentaire du modèle de laboratoire avec une première résine composite,
- fournir la structure de renfort, selon l'une quelconque des revendications précédente,
- insérer la structure de renfort dans le canal dentaire,
- polymériser la première résine composite de manière à obtenir une reconstitution corono-radiculaire.

Dans un développement, la structure de renfort est recouverte par une deuxième résine composite et l'étape de polymérisation est configurée pour polymériser la première résine composite et la deuxième résine composite.

De manière avantageuse, avant l'étape de polymérisation, une deuxième structure de renfort est déposée à côté de la première structure de renfort, la deuxième structure de renfort étant dépourvue de tige additionnelle formant un canal de gravure et la première structure de renfort étant disposée au centre du canal dentaire.

L'invention a également pour objet une reconstitution dentaire corono-radiculaire qui facilite l'accès au canal dentaire a posteriori dans un modèle de laboratoire.

On tend à atteindre cet objet au moyen d'une reconstitution dentaire corono-radiculaire obtenue par l'un des différents modes de réalisation décrits plus haut.

L'invention a également pour objet un procédé d'accès à l'intérieur d'une reconstitution dentaire corono-radiculaire qui soit facile à mettre en œuvre et réduit les risques de perforation d'une paroi canalaire dans un modèle de laboratoire.

On tend à atteindre cet objet au moyen d'un procédé d'ouverture d'une reconstitution dentaire corono-radiculaire comportant la gravure du canal de gravure au moyen d'un foret en utilisant les tiges de renfort de la structure de renfort comme guide pour l'enfoncement d'un foret.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en coupe, des structures de renfort pour reconstitution dentaire corono-radiculaire selon deux modes de réalisation,
- les figures 3, 4, 5 et 6 représentent, de manière schématique et en coupe, différentes configurations d'une structure de renfort,
- les figures 7, 8, 9 et 10 représentent, de manière schématique et en coupe, des étapes d'un procédé de réalisation d'une reconstitution corono-radiculaire, selon un mode de réalisation,
- la figure 11 représente, de manière schématique, en coupe, l'ouverture d'une reconstitution corono-radiculaire.

### Description d'un mode de réalisation préférentiel de l'invention

Les inventeurs ont observé que lors des tentatives d'accès à un apex infecté qui fait suite à une reconstitution corono-radiculaire, les risques de fragilisation ou de perforation des parois canalaires sont liées à la difficulté de graver la reconstitution selon une direction maitrisée sur toute la profondeur de la reconstitution.

Les inventeurs ont observé qu'il est difficile de maitriser la direction de la gravure à cause de la dureté et de la résistance mécanique des structures de renfort qui sont insérées dans la reconstitution dentaire corono-radiculaire. Comme indiqué précédemment, la reconstitution est réalisée dans un matériau composite qui comporte au moins une résine polymère associée à des renforts sous la forme de tiges.

La reconstitution est un élément composite formé par des matériaux ayant des performances mécaniques très différentes. Ces différences de comportement mécaniques sont recherchées pour faciliter la réalisation de la reconstitution corono-radiculaire et assurer une bonne résistance mécanique de la reconstitution. C'est pourquoi, il est particulièrement avantageux de placer des tiges de renfort dans de multiples directions et si possible de manière à être réparties dans tout le volume du renfort. Cependant, ces configurations compliquent fortement les opérations de gravure pour atteindre un apex infecté. Il est donc proposé une structure de renfort modifiée qui permet de sécuriser l'étape de gravure d'un canal d'accès qui fait suite à la réalisation de la reconstitution corono-radicalaire.

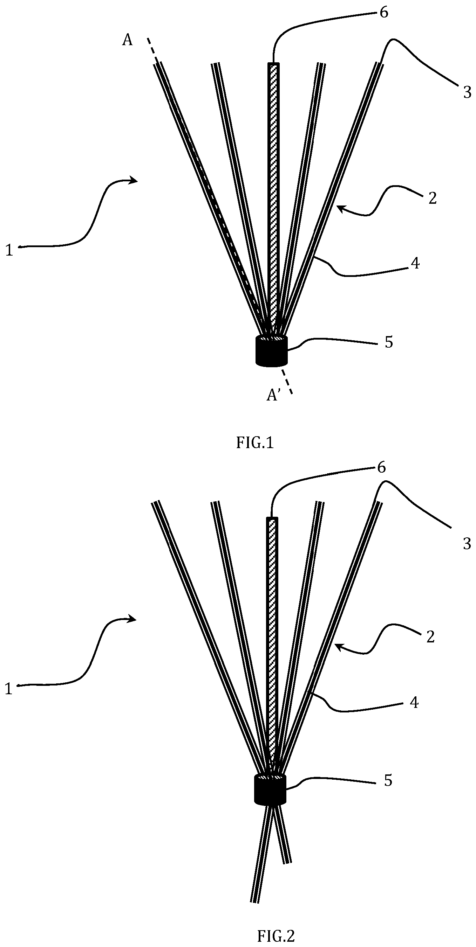

Comme illustré à la figure 1, la structure de renfort 1 pour reconstitution dentaire corono-radiculaire comprend un faisceau de tiges 2. Par faisceau de tiges 2, on entend un ensemble d'éléments longilignes liés ensemble. Les différentes tiges sont sensiblement parallèles les une aux autres et elles sont au moins orientées selon la même direction générale.

Le faisceau comprend au moins deux tiges 2. Préférentiellement, le faisceau comprend de 2 à 10 tiges, et encore, plus préférentiellement, de 3 à 10 tiges et, encore plus préférentiellement, de 3 à 5 tiges. Le nombre de tiges 2 est, avantageusement, inversement proportionnel au diamètre des tiges 2.

Les tiges 2 sont, avantageusement, de longueur identique. Elles forment ainsi un faisceau de forme homogène. Dans la variante de réalisation représentée à la figure 2, les tiges 2 peuvent être de longueurs différentes, leurs extrémités étant décalées.

Les tiges 2 sont avantageusement flexibles pour pouvoir s'insérer facilement dans le canal dentaire et s'adapter à la morphologie complexe des canaux dentaires. Par flexible, on entend un élément souple, qui peut se courber facilement.

Sur la figure 1, les tiges 2 sont droites : elles sont représentées de manière schématique. En réalité, comme elles sont flexibles, elles peuvent présenter une forme courbe.

Les tiges 2 ont un très faible diamètre. Par faible diamètre, on entend un diamètre inférieur ou égal à 0,5mm et avantageusement compris entre 0,1mm et 0,5mm.

Les tiges 2 peuvent s'adapter ainsi à de nombreuses structures canalaires, même à des structures très exiguës.

Selon un mode de réalisation, les tiges 2 ont un diamètre identique, c'est-à-dire que toutes les tiges ont à peu près le même diamètre à 0,05 mm près. Selon un autre mode de réalisation, les tiges 2 ont une section croissante depuis le centre du faisceau vers la périphérie du faisceau.

Par exemple, les tiges peuvent avoir un diamètre croissant au fur et à mesure qu'elles se rapprochent d'un centre de la structure de renfort. Par exemple, le diamètre peut être égale à 0,5mm proche du centre et les tiges en position périphérique peuvent avoir un diamètre de 0,3mm.

Selon un autre exemple, le faisceau peut être formé de deux tiges de 0,5 mm de diamètre, de deux tiges de 0,3 mm de diamètre et de deux tiges de 0,15 mm de diamètre.

Le diamètre de la tige peut aussi varier tout au long de sa longueur et la tige peut avoir une géométrie cylindro-conique, cylindrique à étage, en double conicité ou encore avec une conicité variable sur toute sa longueur.

Selon un autre mode de réalisation, les tiges 2 peuvent avoir une section décroissante depuis le centre du faisceau vers la périphérie du faisceau.

Les tiges 2 sont avantageusement en matériau composite : les tiges 2 sont formées d'au moins une fibre 3 enrobée d'une première matrice polymère 4.

Avantageusement, la première matrice polymère 4 sera choisie par l'homme du métier afin de permettre une association solide des fibres entre elles pour former une tige composite fibrée résistante. Préférentiellement, chaque tige 2 comporte plusieurs fibres 3 indépendantes les unes des autres ou sous la forme d'un assemblage de fibres, les fibres pouvant être, par exemple, torsadées et éventuellement floquées, recouverte d'un revêtement.

Les fibres 3 sont, de préférence, des fibres longues unidirectionnelles. Les fibres 3 d'une même tige 2 sont enrobées dans une matrice polymère 4. Chaque tige 2 est formée de fibres 3 enrobées dans une matrice polymère 4.

Les tiges 2 sont, de préférence, individuellement, entièrement polymérisées de manière à former des tiges 2 flexibles indépendantes les unes des autres.

Les fibres 3 jouent le rôle de renfort au sein des tiges 2, dans leur grand axe (axe AA' de la figure 1).

Les fibres 3 des tiges 2 peuvent être de nature identique ou différente, au sein d'une même tige 2. Les fibres 3 peuvent de nature identique ou différente d'une tige 2 à l'autre.

Toute sorte de fibre peut être utiliser dans la mesure où elle possède un revêtement de surface (ou « coating » en anglais) compatible avec la résine d'assemblage utilisée. Il peut s'agir de fibres manufacturées artificielles, comme des fibres siliceuses, des fibres de carbone, ou encore des fibres organiques (du type poly(p-phénylènetéréphtalamide) (PPD-T), aramide, nylon...) ou même des fibres naturelles. Des fibres minérales peuvent être utilisées.

Comme représenté sur les figures 1 et 2, les tiges 2 sont assemblées, connectées mécaniquement par un élément d'assemblage 5. Toutes les tiges 2 sont maintenues ensemble par l'élément d'assemblage 5. L'élément d'assemblage 5 est configuré pour grouper la pluralité de tiges 2.

L'élément d'assemblage 5 recouvre partiellement la longueur des tiges 2 et est configuré pour tenir mécaniquement les tiges ensemble et pour laisser libre une partie de la longueur des tiges 2.

Dans les modes de réalisation illustrés, une extrémité des tiges 2 est libre.

Le moyen d'assemblage 5 est disposé de manière à ce qu'au moins la moitié de la longueur des tiges 2 ne soit pas solidarisée par le moyen d'assemblage 5. De manière avantageuse, le moyen d'assemblage 5 est disposé de manière à ce que moins du tiers de la longueur des tiges 2 ne soit pas solidarisée par le moyen d'assemblage 5. En d'autres termes, le moyen d'assemblage 5 recouvre moins de la moitié de la longueur des tiges 2 et avantageusement moins du tiers de la longueur des tiges 2.

L'élément d'assemblage 5 est, par exemple, positionné dans le premier tiers de la longueur du faisceau de tiges 2, de manière à permettre la flexion des tiges 2 par rapport à l'élément d'assemblage et éventuellement la flexion d'une tige 2 par rapport à l'autre.

Préférentiellement, l'élément d'assemblage 5 est disposé à une des extrémités du faisceau de tiges 2, pour entraver, au minimum, la liberté de flexion des tiges 2. Par extrémité, on entend que l'élément d'assemblage 5 est positionné sur le premier quart de la longueur de la tige 2.

Les tiges 2 sont maintenues d'un seul côté et peuvent former un faisceau évasé. Par faisceau évasé, on entend un faisceau de tiges ayant la forme d'un bouquet, c'est-à-dire que la section du faisceau de tiges 2 au niveau de l'élément d'assemblage est strictement inférieure à la section du faisceau de tiges au niveau de l'extrémité libre, i.e. l'extrémité opposée à l'élément d'assemblage 5. Cependant les tiges 2 peuvent être assemblées de façon circulaire, ovale ou selon une section plane, en fonction de la forme que lui donnera l'élément d'assemblage 5.

Les tiges 2 peuvent être solidarisées à leur extrémité mais les extrémités peuvent ne pas coïncider, par exemple, dans le cas de tiges 2 de longueurs différentes.

Encore plus préférentiellement, l'élément d'assemblage 5 est positionné sur le bout des tiges 2, le bord extrême des tiges, c'est-à-dire que les tiges ne dépassent que d'un côté de l'élément d'assemblage 5.

L'élément d'assemblage 5 peut être en résine composite. La résine est choisie parmi les résines méthacrylate, poly éther éther cétone (PEEK) et époxide. Il est également possible de réaliser l'élément d'assemblage 5 avec une gaine thermorétractable.

La résine peut contenir des additifs, sous forme de colorants minéraux ou organiques, ainsi que des particules microniques ou nanométriques destinées à en modifier la consistance ou les performances mécaniques.

Par exemple, les tiges 2 sont maintenues par un manchon en résine composite polymérisée. Par manchon, on entend une pièce cylindrique ouverte au moins en une de ces deux extrémités.

L'élément d'assemblage 5 peut être réalisé par un collage des extrémités des tiges avec une colle composite. Cette technique est, préférentiellement, choisie lorsque les extrémités des tiges sont décalées. On décale les extrémités des tiges, dans l'élément d'assemblage 5, lorsqu'un apex fin, pointu est recherché pour le faisceau de tiges.

L'élément d'assemblage 5 est configuré pour maintenir les tiges 2 ensemble lors de leur manipulation. Il est également configuré de telle sorte qu'il est possible de retirer des tiges 2 une à une ou par petite quantité dans le cas où la structure d'accueil du faisceau de tiges est de dimension inférieure au faisceau de tiges.

Lorsqu'une ou plusieurs tiges 2 sont retirées, l'élément d'assemblage 5 continue à maintenir les tiges restantes. L'énergie pour arracher une tige 2 du faisceau est inférieure à l'énergie nécessaire pour ouvrir ou casser l'élément d'assemblage 5. De cette manière, la taille du faisceau de tiges 2 est adaptable en fonction des besoins.

Dans un mode préférentiel de l'invention, le moyen d'assemblage 5 n'empêche pas les tiges 2 de glisser les unes par rapport aux autres sur au moins un dixième de leur longueur et il les bloque ou les retient au-delà de cette distance. Par exemple, les tiges 2 peuvent glisser les unes par rapport aux autres selon leur grand axe (axe AA' de la figure 1). Les tiges 2 peuvent se croiser au sein de la structure de renfort.

Afin de faciliter les opérations d'accès aux zones apicales de la racine dentaire, il est particulièrement avantageux de définir un canal de gravure privilégiée 6 à l'intérieur de la structure de renfort 1.

Ce canal de gravure privilégiée 6 est configuré pour s'éliminer plus facilement que les tiges de renfort 2 de la structure de renfort 1. Ce canal de gravure privilégiée 6 est configuré pour définir un canal qui sera gravé plus facilement que le reste de la structure de renfort 1 ce qui va permettre de réduire les risques de fragilisation ou de perforation des parois canalaires en contraignant la direction de la gravure dans la reconstitution corono-radiculaire.

Afin de mieux maitriser la direction de la gravure, les inventeurs proposent de réaliser un canal de gravure privilégiée 6 qui va se graver plus facilement que les autres matériaux de la reconstitution de manière à mieux contraindre le chemin de gravure.

Le canal de gravure 6 est avantageusement réalisé dans un matériau qui présente des performances à l'abrasion inférieures aux performances à l'abrasion des matériaux formant les tiges de renfort 2. De manière avantageuse, le matériau formant le canal de gravure 6 présente une dureté inférieure à la dureté du matériau utilisé pour former les tiges 2. Dans un mode de réalisation préférentiel, la dureté du matériau formant le canal de gravure est inférieure ou égale à 90% de la dureté du matériau formant les tiges 2, encore plus préférentiellement inférieure ou égale à 70% de la dureté du matériau formant les tiges 2.

La dureté peut être une dureté Vickers ou une dureté Shore selon les matériaux utilisés. Il est également possible d'utiliser des duretés Rockwell, Brinell ou Meyer.

Il est également avantageux de prévoir que le canal de gravure 6 est réalisé dans un matériau qui présente des performances à l'abrasion inférieures aux performances à l'abrasion du matériau formant la matrice polymère 7 qui remplit le canal dentaire 8. De manière avantageuse, le matériau formant le canal de gravure 6 présente une dureté inférieure à la dureté du matériau utilisé pour former la matrice polymère 7. Dans un mode de réalisation préférentiel, la dureté du matériau formant le canal de gravure est inférieure ou égale à 90% de la dureté du matériau formant la matrice polymère 7, encore plus préférentiellement inférieure ou égale à 70% de la dureté du matériau formant la matrice polymère 7. Dans un mode de réalisation préférentiel, le matériau formant le canal de gravure 6 est différent d'un métal ou d'un alliage métallique.

La structure de renfort 1 comporte une tige additionnelle qui est différente des tiges de renfort 2. La tige additionnelle va définir le canal de gravure privilégiée 6. Selon les modes de réalisation, la tige additionnelle est fixée directement aux tiges de renfort 2 et/ou à l'élément d'assemblage 5. Dans un mode de réalisation particulier, la tige additionnelle est dépourvue de contact direct avec l'élément d'assemblage 5. De manière avantageuse, la tige additionnelle est en contact direct avec au moins une des tiges de renfort.

La structure de renfort 1 est utilisée dans la future reconstitution corono-radiculaire afin de former une zone à abrasion privilégiée qui est entourée par les tiges de renfort 2 qui forment des zones à abrasion réduite. Les tiges de renfort 2 vont contraindre le foret dans un espace prédéfini afin qu'il grave préférentiellement le canal de gravure 6. Il est avantageux de prévoir que la tige additionnelle présente une longueur égale à au moins 90% de la plus petite tige de renfort 2 de la structure de renfort 1.

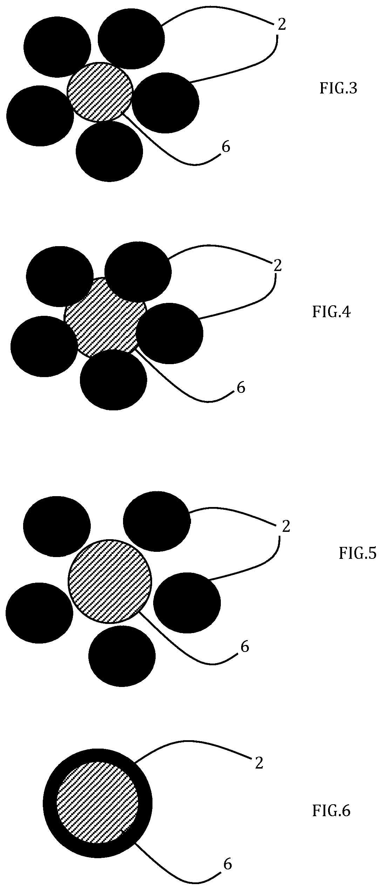

Dans un premier mode de réalisation illustré aux figures 3, 4, 5 et 6, le canal de gravure 6 est entouré par les tiges de renfort 2. Selon les cas de figure, le canal de gravure 6 est entouré complètement ou partiellement par les tiges de renfort 2. En entourant complètement le canal de gravure 6 par les tiges de renfort 2, les risques de gravure selon une direction non souhaitée sont faibles voire nuls. Cependant, dans un tel mode de réalisation, l'encombrement de la structure de renfort 1 peut être important. Il est donc avantageux d'entourer partiellement le canal de gravure 6 en utilisant avantageusement moins de cinq tiges de renfort comme cela est représenté aux figures 3, 4 et 5. Une configuration particulièrement avantageuse utilise trois tiges de renfort 2 qui sont disposées à la périphérie du canal de gravure 6 et préférentiellement de manière à définir un triangle équilatéral ou au moins isocèle. Cette configuration est particulièrement efficace et présente un faible encombrement.

Des configurations avec deux tiges de renfort sont également possibles, mais cela nécessite une plus grande pratique de ce type de structures de renfort 1 en bloquant le foret contre les deux tiges de renfort 2. Dans ce dernier cas de figure, il est avantageux de ne pas placer les deux tiges de renfort de manière diamétralement opposée par rapport au canal de gravure 6.

Afin de contraindre efficacement la direction d'enfoncement du foret lors de l'opération de gravure, il est particulièrement avantageux de mettre les tiges de renfort 2 en contact avec le canal de gravure 6. De cette manière, lors de l'insertion de la structure de renfort 1, les tiges de renfort 2 restent proches du canal de gravure 6.

De manière encore plus avantageuse, les tiges de renfort 2 sont en contact avec le canal de gravure 6 et sont mécaniquement fixées au canal de gravure 6. De cette manière, lors de l'insertion de la structure de renfort 1, les tiges de renfort restent en contact du canal de gravure. Si le canal de gravure 6 se déforme lors de la réalisation de la reconstitution corono-radiculaire, il en va de même des tiges de renfort 2. Dans un tel mode de réalisation, il est particulièrement avantageux de limiter l'encombrement de la structure de renfort 1 en réduisant le nombre de tiges 2. En alternative, il est possible de prévoir que certaines tiges de renfort 2 soient fixées directement au canal de gravure 6 et que d'autres tiges 2 ne soient pas fixées directement au canal de gravure 6 tout en étant solidaires par l'intermédiaire du moyen d'assemblage 5. Les tiges non fixées au canal de gravure 6 peuvent remplir le canal dentaire afin de renforcer la future reconstitution corono-radiculaire.

Dans un mode de réalisation préférentiel, la tige additionnelle formant le canal de gravure 6 est fixée aux tiges 2 sur une distance représentant au moins 70 % de sa longueur. De préférence, le canal de gravure 6 est mécaniquement lié avec au moins une des tiges de renfort 2 sur toute sa longueur. Selon les modes de réalisation, le canal de gravure 6 est fixé continument à au moins une des tiges de renfort 2. En alternative, le canal de gravure 6 est fixé ponctuellement à au moins une des tiges de renfort 2 au moyen de plusieurs points de fixation distincts les uns des autres (mode non représenté). Il est possible de combiner ces modes de réalisation selon les tiges de renfort 2 dans une même structure de renfort 1. En augmentant la distance de fixation entre les tiges de renfort 2 et le canal de gravure 6, les tiges de renfort 2 contraignent le foret sur une plus grande profondeur. Dans un mode de réalisation particulier, la fixation est obtenue par collage. De manière avantageuse, la tige additionnelle est fixée à au moins une des tiges de renfort sur toute la longueur en vis-à-vis.

Dans cette configuration, la forme prise par le futur canal de gravure 6 à l'intérieur du canal dentaire est également prise par la pluralité de tiges de renfort 2 qui vont contraindre la direction du foret lors de la future étape de gravure. Il est particulièrement avantageux de prévoir que le futur canal de gravure 6 est fixé à la pluralité de tiges de renfort 2. De cette manière, plusieurs tiges de renfort 2 sont liées entre elles et elles se déforment de la même manière.

Lors de l'élimination du canal de gravure privilégiée 6, les tiges de renfort 2 qui entourent le canal 6 vont contraindre le foret pour qu'il suive la direction du canal 6. Les risques de perforation des parois canalaires à cause d'un foret qui s'est enfoncé selon une mauvaise direction sont très fortement réduits.

Il est avantageux de prévoir que les tiges de renfort 2 présentent une longueur au moins égale à celle du canal de gravure 6 en partant du moyen d'assemblage 5.

Il est possible de prévoir que chaque tige 2 présente une extrémité libre mobile en flexion par rapport aux autres tiges 2 du faisceau de tiges. Les tiges dépassent préférentiellement du canal de gravure 6 selon l'axe longitudinal dans les zones libres en flexion.

Dans un mode de réalisation particulier, la structure de renfort 1 comporte au moins une tige qui présente une extrémité libre mobile en flexion et en translation par rapport aux autres tiges 2 du faisceau de tiges et par exemple par rapport aux tiges 2 fixées au canal de gravure 6. Les tiges 2 peuvent aussi glisser librement les unes par rapport aux autres selon leur grand axe, tout en étant freinées par leur frottement réciproque.

Il est également possible de prévoir que le canal de gravure 6 présente également une extrémité libre en flexion par rapport aux tiges 2. Dans cette configuration, la partie en contact entre les tiges 2 et le canal de gravure privilégié 6 va définir la direction principale du foret lors de la gravure.

Les figures 3 et 4 représentent des vues en coupe selon un plan perpendiculaire à l'axe longitudinal des tiges 2. La zone de gravure privilégiée 6 est entourée par un groupe d'au moins deux ou trois tiges de renfort. Les tiges de renfort 2 vont former un guide pour le foret en le contraignant à creuser le matériau le plus facile à graver.

Dans le mode de réalisation de la figure 3, le canal de gravure 6 est en contact ponctuel avec les tiges de renfort 2. Dans le mode de réalisation de la figure 4, le canal de gravure 6 recouvre une surface plus importante des tiges de renfort 2 afin d'augmenter la tenue mécanique entre le canal 6 et la tige 2 associée.

Dans un mode de réalisation particulier, la tige additionnelle formant le canal de gravure 6 recouvre au moins un tiers de la circonférence d'au moins une des tiges de renfort 2 dans un plan de coupe perpendiculaire à l'axe longitudinal de la tige de renfort 2, de préférence de toutes les tiges 2 en contact. De manière préférentielle, la tige additionnelle recouvre moins deux tiers de la circonférence de la tige de renfort 2 dans le plan de coupe perpendiculaire à l'axe longitudinal de la tige de renfort 2. Dans un mode de réalisation non illustré, le matériau formant le canal de gravure entoure complètement au moins une tige de renfort 2 selon un plan de coupe perpendiculaire à l'axe longitudinal de la tige de renfort 2.

Dans un deuxième mode de réalisation illustré à la figure 5, le canal de gravure 6 est séparé des tiges de renfort de manière à se trouver en contact direct avec la matrice polymère 7 qui remplit le canal dentaire 8. Dans un mode de réalisation particulier, la matrice polymère 7 entoure complètement le canal de gravure 6 et est en contact sur toute sa circonférence. Le canal de gravure 6 est avantageusement réalisé dans un matériau qui présente des performances à l'abrasion inférieures aux performances à l'abrasion des matériaux formant la matrice polymère 7. De cette manière, lors de l'élimination de la zone de gravure privilégiée, la matrice polymère 7 qui entoure le canal de gravure 6 va contraindre le foret à suivre la direction du canal de gravure 6. Les risques de perforation des parois canalaires à cause d'un foret qui s'étend transversalement dans le renfort sont très fortement réduits. Dans ce cas de figure, la matrice polymère 7 contraint le foret pour qu'il grave le canal de gravure 6.

Dans un troisième mode de réalisation illustré à la figure 6, le canal de gravure 6 est formé par une tige additionnelle qui comporte une âme entourée par une gaine. L'âme va former le canal de gravure 6 alors que la gaine va former la tige de renfort 2 creuse. L'âme est avantageusement réalisée dans un matériau qui présente des performances à l'abrasion inférieures aux performances à l'abrasion des matériaux formant la gaine. De cette manière, lors de l'élimination de l'âme, la gaine qui entoure le canal de gravure 6 va contraindre le foret à suivre la direction du canal 6. Les risques de perforation des parois canalaires sont très fortement réduits.

Il est bien entendu possible de combiner entre eux ces différents modes de réalisation.

Les inventeurs ont observé que les modes de réalisation illustrés sur les figures 3, 4 et 6 sont particulièrement avantageux car ils permettent de réaliser des canaux de gravure 6 dans des matériaux faciles à graver et/ou de faible diamètre. Le diamètre maximal du canal de gravure 6 est avantageusement inférieur à 1,2mm. En effet, dans ces configurations, les matériaux formant le canal de gravure 6 sont protégés par les tiges de renfort 2.

Les inventeurs ont observé que lorsque le canal de gravure 6 est utilisé seul, c'est-à-dire hors de la structure de renfort 1 avec des tiges de renfort 2 entourantes, les contraintes d'utilisation liées au canal de gravure 6 sont importantes. Si le canal de gravure est trop rigide, il risque de se casser lors de son introduction dans le canal dentaire 8 car il ne pourra pas facilement se déformer pour suivre la forme du canal dentaire 8. En revanche, si le matériau est trop flexible ou trop fluide, le canal de gravure 6 ne sera pas en mesure de supporter son poids. L'introduction sera alors très difficile et le canal de gravure 6 se déformera sans suivre la forme du canal dentaire 8. Il apparait également que ces contraintes de réalisation favoriseront la réalisation de canaux de gravure 6 ayant des diamètres importants ce qui n'est pas toujours utilisable.

Au contraire, dans la structure de renfort 1 proposée, si le matériau de la tige additionnelle est trop rigide, il peut de se fissurer mais il restera accroché aux tiges de renfort 2 qui définiront la forme du canal de gravure 6. En revanche, si le matériau est trop flexible, il ne se tient pas tout seul mais il est supporté par les tiges de renfort 2.

Les configurations précitées sont donc particulièrement avantageuses car elles permettent un plus grand choix dans les matériaux utilisables pour former le canal de gravure 6 et dans les dimensions utilisables

Le canal de gravure peut par exemple être formé dans un matériau thermoplastique et préférentiellement en élastomère thermoplastique. Il est particulièrement avantageux de prévoir la formation d'un canal de gravure 6 en polyisoprène et avantageusement en polyisoprène synthétique. Il est également possible de réaliser le canal de gravure 6 en cis-1,4-polyisoprène ou en trans-1,4-polyisoprène et avantageusement dans un trans-1,4-polyisoprène dont la masse moléculaire est comprise en 16000 et 18000g/mol. Il est particulièrement avantageux de réaliser le canal de gravure 6 en gutta-percha (sous ses formes alpha, beta et gamma) ou en gutta-balata. Dans un mode de réalisation particulier, le canal de gravure 6 est dépourvu de résine polymérisable. Il est particulièrement avantageux de prévoir que le canal de gravure 6 est exclusivement réalisé en matériau thermoplastique ou en matériau textile imprégné de résine.

L'utilisation de gutta-percha est particulièrement avantageuse car elle peut être chargée avec des éléments radio-opaques qui permettent d'observer aisément le canal de gravure 6 après la reconstitution corono-radiculaire, avant l'étape de gravure ou en cours de gravure afin de déterminer la distance séparant le trou formé et la paroi dentaire.

Dans un mode de réalisation particulièrement avantageux, le matériau formant le canal de gravure 6 comporte 20% massique de gutta-percha, entre 35% et 75% massique d'oxyde de zinc, entre 2% et 30% massique de sulfate de baryum qui permet de rendre le mélange radio opaque. Il est également possible d'adjoindre entre 1 et 4% massique d'un plastifiant, par exemple une cire et/ou une résine afin d'obtenir la viscosité recherchée.

Il est encore possible d'ajouter un colorant par exemple de l'érythrosine afin de colorer le mélange. Des éléments anti-microbiens peuvent être ajoutés par exemple de l'hydroxyde de calcium, de la Chlorhexidine, ou de l'iodoforme.

Dans un mode de réalisation particulièrement avantageux, le matériau formant le canal de gravure 6 possède une température de fusion inférieure à 120°C.

Il est avantageux de remplir le canal dentaire 8 par un matériau polymère 7 qui est une matrice organique et plus particulièrement par un matériau choisi parmi les résines acrylates, les résines méthacrylates, les résines polyméthacrylates, les résines uréthane dimétacrylates, les résines bis phénol-a-glycidil diméthacrylate-époxy.

De cette manière, il est alors possible de graver le canal de gravure 6 privilégiée à l'intérieur de la structure de renfort 1 de la reconstitution dentaire corono-radiculaire, le canal de gravure 6 privilégiée permet de contraindre la direction d'enfoncement du foret dans la reconstitution dentaire.

Bien que le canal de gravure 6 soit délimité par une pluralité de tiges de renfort 2, il est possible de prévoir que le matériau formant le canal de gravure 6 déborde au-delà d'une ou plusieurs des tiges 2. Il est possible de former une structure de renfort 1 dans laquelle, plusieurs tiges de renfort 2 sont placées dans un volume de matériau de gravure, les tiges 2 délimitant le canal et assurant un bon placement du foret. Il est possible de prévoir qu'une ou plusieurs des tiges sont complètement entourées par le matériau formant le canal de gravure selon un plan de coupe perpendiculaire à l'axe longitudinal des tiges de renfort 2.

Il est possible de prévoir que la structure de renfort 1 possède une ou plusieurs tiges de renfort 2 qui ne sont pas connectées directement au canal de gravure 6. Chacune de ces tiges 2 présente, avantageusement, une mobilité dans les trois dimensions de l'espace afin de mieux remplir le volume du canal dentaire 8.

Avantageusement, l'élément d'assemblage 5 n'empêche pas les tiges 2 non liées au canal de gravure 6, aussi appelées micro-tenons, de se déplacer entre elles dans les trois dimensions.

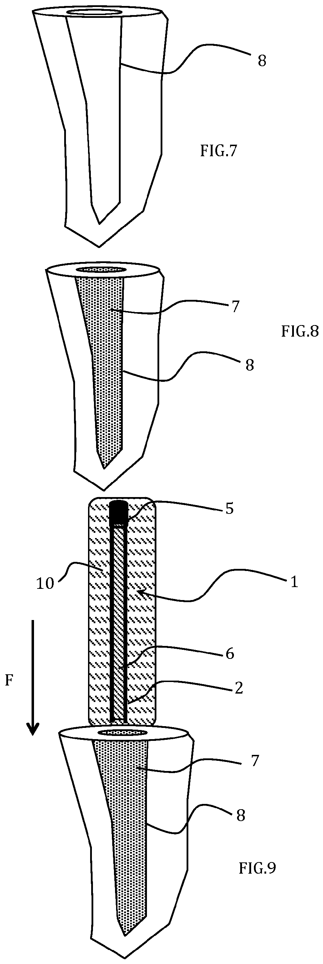

Comme représenté sur les figures 7 à 10, le procédé de réalisation d'une reconstitution dentaire corono-radiculaire 9, sur un modèle de laboratoire, par exemple un moule, comprend les étapes successives suivantes :
- remplir au moins partiellement un canal dentaire 8 du modèle de laboratoire avec une première résine composite 7, (figure 8)
- fournir la structure de renfort 1 décrite précédemment avec son canal de gravure 6, et avantageusement imprégnée avec une deuxième résine composite 10, (figure 9)
- insérer la structure de renfort 1 dans le canal dentaire 8,
- polymériser la première résine composite 7 de manière à obtenir une reconstitution corono-radiculaire 9.

En alternative moins avantageuse, la structure de renfort 1 est installée dans le canal dentaire 8 avant de remplir le canal dentaire avec la résine 7.

La polymérisation de la résine 7 est réalisée alors que la structure de renfort se trouve dans le canal dentaire afin de figer sa position.

Il est particulièrement avantageux de prévoir que le canal dentaire 8 est également rempli par d'autres structures de renfort 11 qui possèdent un canal de gravure 6 ou qui, préférentiellement, en sont dépourvues. Dans un mode de réalisation préférentiel, la reconstitution corono-radiculaire comporte une seule structure de renfort 1 qui est munie d'un canal de gravure 6.

Le reste du canal dentaire 8 peut être rempli par des structures de renfort 11 comportant plusieurs tiges 2 associées mécaniquement ensemble par un élément d'assemblage 5. Il est également possible de remplir le canal dentaire 8 par des tiges 2 individuelles avant l'étape de polymérisation.

Afin de faciliter l'accès au fond de la reconstitution, il est particulièrement avantageux de placer la structure de renfort 1 munie d'un canal de gravure 6 au centre ou sensiblement au centre du canal dentaire 8 dans un plan de coupe qui est perpendiculaire à l'axe longitudinal du canal dentaire 8. Les inventeurs ont observé que les plus fortes contraintes mécaniques se situent sur le bord de la reconstruction. En plaçant le canal de gravure 6 au centre de la reconstitution, l'accès est sécurisé sans modifier la tenue mécanique générale de la reconstitution. Les autres structures de renfort 1 et 11 qui sont placées dans la reconstitution et à la périphérie permettent d'assurer une bonne tenue mécanique en étant placées à la périphérie.

La figure 7 représente un canal radiculaire 8. Il s'agit d'une cavité. Le procédé peut être réalisé sur tout modèle de laboratoire présentant une cavité.

Lors de l'étape 1), le canal radiculaire 8, ou la cavité, est rempli d'une première résine composite 7 (figure 8). Préférentiellement, il est entièrement rempli de résine.

La structure de renfort 1 est avantageusement imprégnée d'une deuxième résine composite 10 (étape 2). Préférentiellement, la structure de renfort 1 est imprégnée à saturation, c'est-à-dire qu'au moins les tiges 2 de la structure de renfort 1 sont entièrement recouvertes par la deuxième résine composite 10. En variante, la structure de renfort 1 est fournie dépourvue de la deuxième résine composite 10 et la deuxième résine 10 est déposée plus tard.

Préférentiellement, la première résine composite 7 et la deuxième résine composite 10 sont de même nature c'est-à-dire qu'elles présentent les mêmes fonctions chimiques. Encore plus préférentiellement, la première résine composite 9 et la deuxième résine composite 10 sont une seule et même résine de collage, c'est-à-dire elles sont identiques. Ceci permet un meilleur maintien mécanique. Les résines sont polymérisables.

Avantageusement, la même colle composite est utilisée pour la confection de la partie coronaire et de la partie corono-radiculaire.

Selon un autre mode de réalisation, la matrice composite 4 englobant indépendamment chaque tige 2 peut être différente de la première résine composite 9.

Lors de l'étape 3, la structure de renfort 1 est insérée dans le canal dentaire 8 (flèche F de la figure 9). Cette structure de renfort 1 comporte un canal de gravure 6 et est préférentiellement placée au centre du canal dentaire 8.

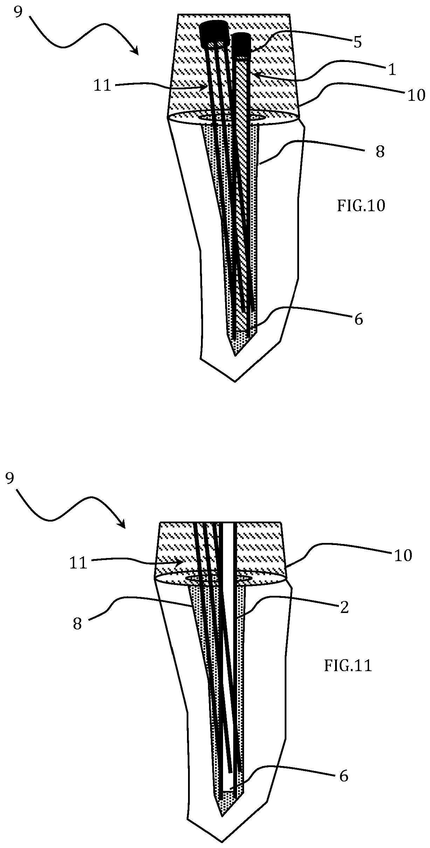

Selon les modes de réalisation, l'élément d'assemblage 5 dépasse du canal dentaire (figure 10). Ce dernier mode de réalisation est avantageux car il est possible de supprimer l'élément d'assemblage 5 une fois que les tiges 2 et la tige additionnelle sont fixement installées dans le canal dentaire 8.

L'élément d'assemblage 5 et le faisceau de tiges 2, enrobées de résine 10, en contact intime avec les parois du canal dentaire, forment un ensemble mécaniquement compact et cohérent, réalisant ainsi une continuité volumique, participant à la répartition des contraintes sans rupture de charge et sans présenter de zones de concentration des contraintes à l'origine des fractures.

Les tiges 2 de la structure de renfort 1 ou des différentes structures de renforts sont dispersées en continuité dans la totalité de la première résine composite 7 de la reconstitution. La structure de renfort 1 s'adapte à la géométrie de la cavité par glissement des tiges 2 les unes par rapport aux autres.

Lors de l'étape 4, la première résine composite 7 et la deuxième résine composite 10 sont polymérisées. Après polymérisation, les tiges 2 sont figées dans la reconstitution corono-radiculaire 9. Il est avantageux de prévoir que la première résine composite 7 et/ou la deuxième résine composite 10 sont des résines qui sont activables par un initiateur chimique et/ou par un rayonnement électromagnétique qui est de préférence un rayonnement visible.

La polymérisation permet de constituer une reconstitution dentaire corono-radiculaire 9 assurant sa rigidité par sa propre forme et l'architecture de ses renforts.

La partie coronaire est, avantageusement, formée des mêmes tiges 2 que la partie radiculaire.

La reconstitution dentaire corono-radiculaire 9, obtenue selon le procédé, peut être réalisée sans procéder à la rectification du canal dentaire 8 dans sa partie corono radiculaire, jusqu'au 2/3 de la partie coronaire. Le canal peut être instrumenté avec des alésoirs à conicité variable pour effectuer le traitement endodontique. A l'apex, la conicité est donc définie par cette instrumentalisation.

De plus, elle a la même géométrie que l'apex du foret d'alésage utilisé lors de la préparation du canal dentaire 8 pour le traitement endodontique et s'adapte facilement aux particularités anatomiques des chambres pulpaires et des canaux dentaires.

La structure de renfort 1 et les résines 7 et/ou 10 forment une structure autoportante assurant la rigidité de la reconstitution.

Comme indiqué plus haut, la reconstitution dentaire peut aussi comprendre des structures de renforts 1, 11 insérées côte à côte dans un même canal dentaire 8 (figure 10). Les deux structures de renfort 1, 11 sont insérées dans un même canal dentaire 8 pour former une même reconstitution dentaire corono-radiculaire. Les éléments d'assemblage 5, de chaque structure de renfort 1, 11 sont disposés côte à côte dans le canal et les tiges 2 des deux structures de renfort peuvent s'entremêler.

Le nombre de tiges et/ou le diamètre des tiges sont adaptés en fonction de la forme et de la taille de la cavité destinée à recevoir les structures de renfort 1 et 11.

Lorsque la structure de renfort 11 est dépourvue de canal de gravure 6, les tiges 2 de chaque structure de renfort 11 sont avantageusement indépendantes les unes des autres et s'adaptent par flexion à la morphologie naturelle d'un canal dentaire 8 sans alésage à une forme définie.

Selon un mode de réalisation préférentiel, l'élément d'assemblage 5 est une gaine thermo-rétractable. Par thermo-rétractable, on entend un élément possédant la propriété de se rétracter sous l'action de la chaleur. Par gaine, on entend un étui, un fourreau pouvant s'adapter à la forme, dimension du faisceau de tiges.

Préférentiellement, et comme représenté sur les figures 10 et 11, lors de l'étape 3) du procédé de réalisation de la reconstitution dentaire corono-radiculaire décrit ci-dessus, les structures de renfort 1, 11, munies de gaine thermo-rétractable, sont insérées dans le canal : les tiges 2 se situent au niveau de la partie radiculaire du canal et l'élément d'assemblage 5 est positionné au-dessus de la partie coronaire. L'élément d'assemblage 5 est en position distale par rapport à la partie apicale du canal dentaire.

L'élément d'assemblage 5 est, avantageusement, utilisé comme préhenseur.

Avant l'étape de polymérisation (étape 4 du procédé décrit ci-dessus), une deuxième structure de renfort 11 peut être déposée à côté de la première structure de renfort 1, dans le canal dentaire 8 (figure 10).

Dans cette configuration (élément d'assemblage disposé à l'opposé de la partie apicale du canal dentaire), l'élément d'assemblage 5 peut être éliminé à la fin du procédé de réalisation de la reconstitution dentaire corono-radiculaire.

Selon d'autres variantes, ce positionnement des structures de renfort 1 et 11 peut également être réalisé avec un faisceau de tiges 2 muni d'un élément d'assemblage 5 d'une autre nature. Il peut s'agir d'une simple gaine, d'un manchon, ou encore de tout élément permettant de maintenir les tiges 2 ensemble, sous la forme d'un faisceau. L'élément d'assemblage 5 peut initier toute forme au faisceau de tiges, aplaties dans le même plan, ovoïde, circulaire, triangulaire. Il n'existe pas de limite aux formes possibles.

Le nombre de structures de renfort 1 insérées dans le canal dentaire 8 dépend de la taille dudit canal. La figure 10 représente, par exemple, un canal dans lequel deux structures de renfort sont insérées côte à côte.

De une à dix structures de renfort 1 peuvent ainsi être insérées dans le canal dentaire.

La reconstitution corono-radiculaire 9 peut être réalisée, par exemple, sur des modèles dentaires de laboratoire.

La reconstitution dentaire corono-radiculaire 9 épouse et respecte les particularités anatomiques et physiologiques du canal radiculaire 8.

La ou les structures de renfort 1 se prolongent dans tout le volume de la partie radiculaire et de la partie coronaire supra gingivale de la reconstitution dentaire corono-radiculaire 9. Elles permettent de renforcer en continuité la totalité du matériau de la reconstitution constituant la partie coronaire mais aussi la partie radiculaire.

Après la réalisation de la reconstitution corono-radiculaire 9, s'il est nécessaire d'accéder à un apex infecté, la partie supérieure de la reconstitution 9 est éliminée de manière à accéder au canal de gravure 6 et aux tiges de renfort 2. Le canal de gravure 6 est gravé avantageusement au moyen d'un foret. Les tiges 2 et/ou la résine composite 7, 10 servent de guide pour contraindre l'enfoncement du foret dans la direction définie par le canal de gravure 6. La résine composite 7, 10 et/ou les tiges de renfort 2 vont former un guide pour le foret afin que ce dernier suive la forme du canal de gravure comme cela est illustré à la figure 11.

La gravure est plus aisée que dans les modes de réalisation de l'art antérieur où un matériau plus homogène est formé pour réaliser la reconstitution corono-radiculaire ou alors sans maitrise de la configuration d'un canal de gravure.

De manière avantageuse, le matériau formant la matrice se grave plus rapidement que le matériau formant les tiges de renfort 2. Il est donc avantageux de choisir le matériau utilisé pour former le canal de gravure en fonction du matériau utilisé pour contraindre la position du foret.

## Revendications

1. Structure de renfort (1) pour reconstitution dentaire corono-radiculaire comprenant :
- une pluralité de tiges de renfort (2),
- une tige additionnelle (6) réalisée dans un matériau se gravant plus rapidement que la pluralité de tiges de renfort (2) de manière à former un canal de gravure (6),
- un élément d'assemblage (5) configuré pour grouper la pluralité de tiges de renfort (2) et la tige additionnelle de manière à former un faisceau de tiges, ledit élément d'assemblage (5) recouvrant partiellement la longueur des tiges de renfort (2), la tige additionnelle (6) étant fixée directement ou indirectement à l'élément d'assemblage (5) entre les tiges de renfort (2),
l'élément d'assemblage (5) étant configuré pour maintenir les tiges de renfort (2) ensemble lors de leur manipulation de telle sorte qu'il est possible de retirer des tiges de renfort (2) une à une ou par petite quantité, la tige additionnelle (6) étant fixée à au moins une tige de renfort (2) adjacente, sur au moins 70% de sa longueur et/ou ponctuellement au moyen de plusieurs points de fixation distincts les uns des autres.

2. Structure de renfort selon la revendication 1, **caractérisée en ce que** au moins une tige de renfort (2) de l'ensemble de tiges de renfort (2) est mobile en glissement par rapport aux autres tiges de renfort (2) selon leur axe longitudinal (AA).

3. Structure de renfort selon l'une des revendications précédentes, **caractérisée en ce que** la tige additionnelle (6) est fixée directement à au moins trois tiges de renfort (2).

4. Structure de renfort selon l'une des revendications précédentes, **caractérisée en ce que** la tige additionnelle recouvre au moins un tiers de la circonférence de la tige de renfort (2) dans un plan de coupe perpendiculaire à l'axe longitudinal de la tige de renfort (2).

5. Structure de renfort selon la revendication précédente, **caractérisée en ce que** la tige additionnelle recouvre au moins deux tiers de la circonférence de la tige de renfort (2) dans le plan de coupe perpendiculaire à l'axe longitudinal de la tige de renfort (2).

6. Structure de renfort selon l'une des revendications 1 à 5, **caractérisée en ce que** la tige additionnelle est en polyisoprène.

7. Structure de renfort selon l'une quelconque des revendications précédentes, **caractérisée en ce que** l'élément d'assemblage (5) est disposé à une des extrémités du faisceau de tiges (2).

8. Structure de renfort selon l'une quelconque des revendications précédentes, **caractérisée en ce que** la pluralité de tiges de renfort (2) comporte des tiges de renfort (2) différentes agencées pour présenter un diamètre croissant depuis le centre du faisceau vers la périphérie du faisceau.

9. Structure de renfort selon l'une quelconque des revendications précédentes, **caractérisée en ce que** les tiges de renfort (2) ont un diamètre décroissant depuis le centre du faisceau vers la périphérie du faisceau.

10. Structure de renfort selon l'une quelconque des revendications précédentes, **caractérisée en ce que** le faisceau de tiges (2) comprend de 3 à 10 tiges de renfort (2).

11. Structure de renfort selon l'une quelconque des revendications précédentes, **caractérisée en ce que** les tiges de renfort (2) de la pluralité de tiges de renfort (2) ont des diamètres allant de 0,1mm à 0,5mm.

12. Procédé de réalisation d'une reconstitution dentaire corono-radiculaire, sur un modèle de laboratoire, comprenant les étapes successives suivantes :
- remplir au moins partiellement un canal dentaire (8) du modèle de laboratoire avec une première résine composite (7),
- fournir la structure de renfort (1), selon l'une quelconque des revendications précédentes,
- insérer la structure de renfort (1) dans le canal dentaire (8),
- polymériser la première résine composite (7) de manière à obtenir une reconstitution corono-radiculaire (9).

13. Procédé de réalisation selon la revendication 12, **caractérisé en ce que** la structure de renfort (1) est recouverte par une deuxième résine composite (10) et **en ce que** l'étape de polymérisation est configurée pour polymériser la première résine composite (7) et le deuxième résine composite (10).

14. Procédé selon l'une des revendications 12 et 13, **caractérisé en ce que**, avant l'étape de polymérisation, une deuxième structure de renfort (11) est déposée à côté de la première structure de renfort (1), la deuxième structure de renfort (11) étant dépourvue de canal de gravure (6) et la première structure de renfort (1) étant disposée au centre du canal dentaire (8).

15. Reconstitution dentaire corono-radiculaire obtenue par le procédé selon l'une quelconque des revendications 12 à 14.

16. Procédé d'ouverture d'une reconstitution dentaire corono-radiculaire sur un modèle de laboratoire selon la revendication précédente comportant la gravure du canal de gravure (6) au moyen d'un foret en utilisant les tiges de renfort (2) de la structure de renfort (1) comme guide pour l'enfoncement d'un foret.

## Patentansprüche

1. Verstärkungsstruktur (1) für eine koronal-radikuläre Zahnrekonstruktion, umfassend:
- eine Mehrzahl von Verstärkungsstäben (2),
- einen zusätzlichen Stab (6), der aus einem Material hergestellt ist, das sich schneller gravieren lässt als die Mehrzahl der Verstärkungsstäbe (2), derart, um einen Gravurkanal (6) zu bilden,
- ein Verbindungselement (5), das konfiguriert ist, um die Mehrzahl der Verstärkungsstäbe (2) und den zusätzlichen Stab derart zusammenzufassen, um ein Bündel von Stäben zu bilden, wobei das Verbindungselement (5) teilweise die Länge der Verstärkungsstäbe (2) bedeckt, wobei der zusätzliche Stab (6) direkt oder indirekt am Verbindungselement (5) zwischen den Verstärkungsstäben (2) befestigt ist,
wobei das Verbindungselement (5) konfiguriert ist, um die Verstärkungsstäbe (2) bei ihrer Handhabung derart zusammen zu halten, dass die Verstärkungsstäbe (2) einzeln oder in kleinen Mengen entnommen werden können, wobei der zusätzliche Stab (6) an mindestens einem benachbarten Verstärkungsstab (2) über mindestens 70 % seiner Länge und/oder punktuell durch mehrere voneinander getrennte Befestigungspunkte befestigt ist.

2. Verstärkungsstruktur nach Anspruch 1, **dadurch gekennzeichnet, dass** mindestens ein Verstärkungsstab (2) der Anordnung von Verstärkungsstäben (2) in Bezug auf die anderen Verstärkungsstäbe (2) entlang ihrer Längsachse (AA) gleitend bewegbar ist.

3. Verstärkungsstruktur nach einem der vorhergehenden Ansprüche, **dadurch gekennzeichnet, dass** der zusätzliche Stab (6) an mindestens drei Verstärkungsstäben (2) direkt befestigt ist.

4. Verstärkungsstruktur nach einem der vorhergehenden Ansprüche, **dadurch gekennzeichnet, dass** der zusätzliche Stab mindestens ein Drittel des Umfangs des Verstärkungsstabs (2) in einer Schnittebene senkrecht zur Längsachse des Verstärkungsstabs (2) bedeckt.

5. Verstärkungsstruktur nach dem vorhergehenden Anspruch, **dadurch gekennzeichnet, dass** der zusätzliche Stab mindestens zwei Drittel des Umfangs des Verstärkungsstabs (2) in der Schnittebene senkrecht zur Längsachse des Verstärkungsstabs (2) bedeckt.

6. Verstärkungsstruktur nach einem der Ansprüche 1 bis 5, **dadurch gekennzeichnet, dass** der zusätzliche Stab aus Polyisopren besteht.

7. Verstärkungsstruktur nach einem der vorhergehenden Ansprüche, **dadurch gekennzeichnet, dass** das Verbindungselement (5) an einem der Enden des Bündels von Stäben (2) angeordnet ist.

8. Verstärkungsstruktur nach einem der vorhergehenden Ansprüche, **dadurch gekennzeichnet, dass** die mehreren Verstärkungsstäbe (2) verschiedene Verstärkungsstäbe (2) aufweisen, die ausgebildet sind, um einen zunehmenden Durchmesser von der Mitte des Bündels zum Umfang des Bündels hin aufzuweisen.

9. Verstärkungsstruktur nach einem der vorhergehenden Ansprüche, **dadurch gekennzeichnet, dass** die Verstärkungsstäbe (2) einen abnehmenden Durchmesser von der Mitte des Bündels zum Umfang des Bündels hin aufweisen.

10. Verstärkungsstruktur nach einem Ansprüche der vorhergehenden Ansprüche, **dadurch gekennzeichnet, dass** das Bündel von Stäben (2) 3 bis 10 Verstärkungsstäbe (2) aufweist.

11. Verstärkungsstruktur nach einem der vorhergehenden Ansprüche, **dadurch gekennzeichnet, dass** die Verstärkungsstäbe (2) der Mehrzahl der Verstärkungsstäbe (2) Durchmesser von 0,1 mm bis 0,5 mm aufweisen.

12. Verfahren zur Herstellung einer koronal-radikulären Zahnrekonstruktion an einem Labormodell, umfassend die folgenden aufeinanderfolgenden Schritte:
- mindestens teilweise einen Zahnkanal (8) des Labormodells mit einem ersten Verbundharz (7) füllen,
- die Verstärkungsstruktur (1) nach einem der vorhergehenden Ansprüche bereitstellen,
- die Verstärkungsstruktur (1) in den Zahnkanal (8) einfügen,
- das erste Verbundharz (7) derart polymerisieren, um eine koronal-radikuläre Zahnrekonstruktion (9) zu erhalten.

13. Verfahren zur Herstellung nach Anspruch 12, **dadurch gekennzeichnet, dass** die Verstärkungsstruktur (1) von einem zweiten Verbundharz (10) bedeckt wird und dass der Polymerisationsschritt konfiguriert ist, um das erste Verbundharz (7) und das zweite Verbundharz (10) zu polymerisieren.

14. Verfahren nach einem der Ansprüche 12 und 13, **dadurch gekennzeichnet, dass** vor dem Polymerisationsschritt neben der ersten Verstärkungsstruktur (1) eine zweite Verstärkungsstruktur (11) aufgebracht wird, wobei die zweite Verstärkungsstruktur (11) keinen Gravurkanal (6) aufweist und die erste Verstärkungsstruktur (1) in der Mitte des Zahnkanals (8) angeordnet ist.

15. Koronal-radikuläre Zahnrekonstruktion, die durch das Verfahren nach einem der Ansprüche 12 bis 14 erhalten wird.

16. Verfahren zum Öffnen einer koronal-radikulären Zahnrekonstruktion an einem Labormodell nach dem vorhergehenden Anspruch, umfassend das Gravieren des Gravurkanals (6) mittels eines Bohrers unter Verwendung der Verstärkungsstäbe (2) der Verstärkungsstruktur (1) als Führung zum Eintreiben eines Bohrers.

## Claims

1. Reinforcement structure (1) for a crown and root tooth restoration comprising:
- a plurality of reinforcement pins (2),
- an additional pin (6) made from a material etched more quickly than the plurality of reinforcement pins (2) so as to form an etching canal (6),
- joining means (5) configured to group the plurality of reinforcement pins (2) and the additional pin together so as to form a bundle of pins, said joining means (5) partially covering the length of the reinforcement pins (2), the additional pin (6) being fixed directly or indirectly to the joining means (5) between the reinforcement pins (2),
the joining means (5) being configured to hold the reinforcement pins (2) together when handled in such a way that it is possible to remove reinforcement rods (2) one by one or in small quantities, reinforcement pins (2), the additional pin being fixed to an adjacent at least one reinforcement pin (2) over at least 70% of its length and/or locally by means of a plurality of attachment points distinct from one another.

2. Reinforcement structure according to claim 1, **characterised in that** at least one reinforcement pins (2) of the set of reinforcement pins (2) is slidingly movable relative to the other reinforcement pins (2) along their longitudinal axis (AA).

3. Reinforcement structure according to one of the foregoing claims, **characterised in that** the additional pin (6) is fixed directly to at least three reinforcement pins (2).

4. Reinforcement structure according to any one of the foregoing claims, **characterised in that** the additional pin covers at least one third of the circumference of the reinforcement pin (2) in a section plane perpendicular to the longitudinal axis of the reinforcement pin (2).

5. Reinforcement structure according to the foregoing claim, **characterised in that** the additional pin covers at least two thirds of the circumference of the reinforcement pin (2) in the section plane perpendicular to the longitudinal axis of the reinforcement pin (2).

6. Reinforcement structure according to one of claims 1 to 5, **characterised in that** the additional pin is made from polyisoprene.

7. Reinforcement structure according to any one of the foregoing claims, **characterised in that** the joining means (5) is disposed at one of the ends of the bundle of pins (2).

8. Reinforcement structure according to any one of the foregoing claims, **characterised in that** the plurality of reinforcement pins (2) comprises different reinforcement pins (2) arranged so as to present an increasing diameter from the centre of the bundle to the periphery of the bundle.

9. Reinforcement structure according to any one of the foregoing claims, **characterised in that** the reinforcement pins (2) have a decreasing diameter from the centre of the bundle to the periphery of the bundle.

10. Reinforcement structure according to any one of the foregoing claims, **characterised in that** the bundle of pins (2) comprises from 3 to 10 reinforcement pins (2).

11. Reinforcement structure according to any one of the foregoing claims, **characterised in that** the reinforcement pins (2) of the plurality of reinforcement pins (2) have diameters ranging from 0.1mm to 0.5mm.

12. Method for performing a crown and root tooth restoration, on a laboratory model, comprising the following successive steps:
- at least partially filling a tooth canal (8) of the laboratory model with a first composite resin (7),
- providing the reinforcement structure (1) according to any one of the foregoing claims,
- inserting the reinforcement structure (1) in the tooth canal (8),
- polymerizing the first composite resin (7) so as to obtain a crown and root restoration (9).

13. Method for performing according to claim 12, **characterised in that** the reinforcement structure (1) is covered by a second composite resin (10) and **in that** the polymerization step is configured to polymerize the first composite resin (7) and second composite resin (10).

14. Method according to one of claims 12 and 13, **characterised in that**, before the polymerization step, a second reinforcement structure (11) is placed alongside the first reinforcement structure (1), the second reinforcement structure (11) being devoid of an etching canal (6) and the first reinforcement structure (1) being located in the centre of the tooth canal (8).

15. Crown and root tooth restoration obtained by the method according to any one of claims 12 to 14.

16. Method for opening a crown and root tooth restoration on a laboratory model according to the foregoing claim comprising etching of the etching canal (6) by means of a drill bit using the reinforcement pins (2) of the reinforcement structure (1) as guide for insertion of the drill bit.
